# FASCICULE DE BREVET EUROPEEN

(11) **EP 2 605 351 B1**
(45) Date de publication et mention de la délivrance du brevet: **22.04.2015**
(21) Numéro de dépôt: 12196757.4
(22) Date de dépôt: 12.12.2012
(51) Int. Cl.: H02G 5/06

(54) **Coude à angles d'orientation multiples pour lignes à haute tension**
Winkelstück mit mehreren Ausrichtungswinkeln für Hochspannungsleitungen
Angular coupling allowing multiple angular adjustments for high-voltage lines

(30) Priorité: 14.12.2011 FR 1161605
(43) Date de publication de la demande: 19.06.2013
(73) Titulaire: ALSTOM Technology Ltd, 5400 Baden (CH)
(72) Inventeur: Bernard, Mathieu, 73100 AIX LES BAINS (FR); Roussel, Frédéric, 73310 CONJUX (FR)
(74) Mandataire: Ilgart, Jean-Christophe

(56) Documents cités:
- DE-C1- 19 803 977
- FR-A1- 2 196 535
- FR-A1- 2 738 946
- US-A- 3 787 604

## Description

### Domaine de l'invention

L'invention concerne le domaine des lignes à haute tension utilisant la technologie de l'isolation gazeuse et, en particulier, les parties coudées destinées obtenir un changement d'orientation de la ligne haute tension.

### Art antérieur et problème posé

Les lignes à haute tension, du type à isolation gazeuse, permettent de transporter des grandes quantités d'énergies électriques sur de longues distances. En effet, les puissances mises en jeu peuvent être de l'ordre de plusieurs millions de volts-ampères (VA). Les pertes de transmission sont relativement très faibles par rapport à la puissance transportée. Enfin, les longueurs peuvent être de plusieurs centaines de kilomètres. Ainsi, une sécurité et une fiabilité élevées sont obtenues. Elles présentent les avantages d'un comportement électrique similaire à celui des lignes aériennes à haute tension. En outre, les gaz ne présentent pas de phénomène de vieillissement. De sorte, qu'il n'y a pratiquement pas de limitation à leur durée de vie. Ceci est primordial au vu des coûts d'investissements élevés, liés au système souterrain de transport d'énergie électrique.

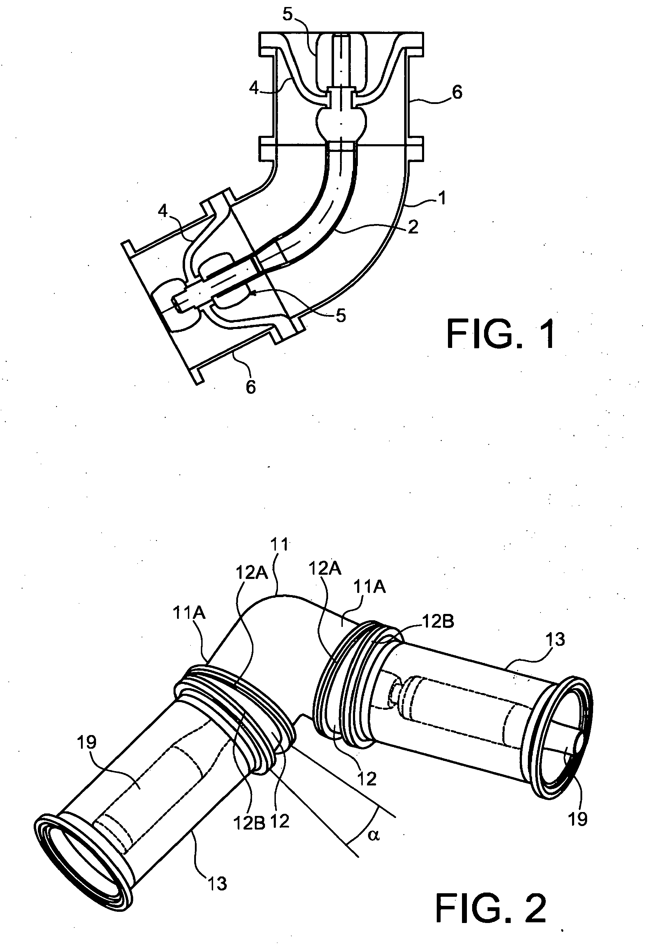

En référence à la figure 1, un coude de ligne à haute tension, du type à isolation gazeuse, actuellement utilisé, est représenté en coupe. Ce coude comprend principalement une virole coudée 1, aux deux extrémités de laquelle est fixé un élément droit 6. Chacun de ces derniers est connecté à des tuyaux droits non représentés d'une canalisation de type à isolation gazeuse. Leurs conducteurs respectifs sont reliés à l'élément conducteur 2 de la virole coudée 1 par l'intermédiaire d'un pare-effluve 5 et d'un isolateur conique 4. Les changements de direction obtenus par les viroles coudées peuvent couvrir des angles de 4 à 90°.

Le document de brevet FR 2 196 535 illustre ce type de matériel.

Toutefois, tous ces différents changements d'orientation nécessitent, pour chaque cas, une virole coudée d'un angle correspondant à ce changement d'orientation. De plus, il est même courant de n'utiliser que des simples coudes d'angles de changement de direction égaux à 30, 40 et 60°. On éprouve alors le besoin d'avoir à sa disposition des viroles coudées, de type « sur mesure », qui puissent être mises à l'angle souhaité. Toutefois, ceci est difficilement compatible avec la standardisation des éléments utilisés à l'heure actuelle. En effet, le nombre trop limité d'angles limite les possibilités angulaires avec l'utilisation de coudes standardisés à angle de changement de direction fixe.

En outre, le processus industriel serait très coûteux pour produire un coude à angle donné différent des angles standards, imposant alors la création d'une variante de virole coudée. Enfin, une utilisation de nombreux éléments standards est nécessaire pour effectuer tous les changements de direction nécessaires.

Le but de la présente invention est de remédier à ces inconvénients, en proposant un système de changement de direction pour les lignes de type à isolation gazeuse pouvant permettre d'assurer le plus grand nombre d'angles de changement d'orientation différents, au niveau des viroles coudées entre deux éléments droits de la ligne à haute tension à isolation gazeuse.

### Résumé de l'invention

A cet effet, l'objet principal de l'invention est un coude de changement de direction pour une ligne à haute tension du type à isolation gazeuse comportant elle-même :
- deux sections droites composées chacune de :
   - une barre conductrice tubulaire ; et
   - une virole de confinement entourant la barre conductrice ; et
- un coude comportant, en outre, une virole coudée.

Selon l'invention, le coude de changement de direction se complète de deux bagues angulaires destinées à être interposées chacune entre la virole coudée et une des deux barres conductrices et leur virole de confinement correspondante, chacune par deux surfaces de liaison, qui sont une première surface de liaison fixée sur la virole coudée et une deuxième surface de liaison fixée sur la barre conductrice correspondante, les première et deuxième surfaces de liaison étant chacune dans un plan angulairement décalé par rapport à l'autre d'un angle déterminé.

Dans le cas particulier ou la virole coudée a, de préférence, un angle de coude de 90 ou de 140°, l'angle déterminé de décalage angulaire des deux dits plans des bagues angulaires est de 10°.

Dans une réalisation principale de l'invention, le coude comporte une électrode fixe, destinée à être connectée à une première des deux barres conductrices et une électrode mobile destinée à être connectée à la deuxième des deux barres conductrices et à être montée sur l'électrode fixe, de manière à pouvoir pivoter par rapport à celle-ci, notamment lors du montage.

Dans ce cas, il est avantageux que l'électrode mobile ait à son extrémité, en contact avec la barre conductrice correspondante, une cavité de jonction inclinée du même angle de décalage angulaire déterminé.

Il est avantageux d'utiliser des pare-effluve entre chaque barre conductrice et une des deux électrodes.

### Liste des figures

L'invention et ses différentes caractéristiques techniques seront mieux comprises à la lecture de la description suivante, qui est accompagnée de plusieurs figures, qui représentent respectivement :
- figure 1, déjà décrite, un coude de ligne à haute tension de type à isolation gazeuse selon l'art antérieur, vue en coupe ;
- figure 2, en vue cavalière, un coude de ligne à haute tension de type à isolation gazeuse selon l'invention ;
- figure 3, en coupe, le coude selon l'invention de la figure 2 ;
- figures 4A, 4B, 4C, 4D, 4E, 4F, 4G et 4H, huit possibilités de montage obtenues avec deux coudes différents selon l'invention.

### Description détaillée de deux réalisations de l'invention

En référence à la figure 2, le principe général régissant le concept de la présente invention est de pouvoir combiner une enveloppe coudée 11 avec une ou deux bagues angulaires 12, chacune de ces dernières présentant une caractéristique de changement de direction d'un angle déterminé.

En effet, chacune de ces bagues angulaires 12 possède deux surfaces de liaison matérialisées par deux bagues de liaison 12A et 12B. Pour chaque bague angulaire 12, les surfaces de liaison matérialisées par les bagues de liaison 12A et 12B sont dans des plans respectifs décalés angulairement l'un par rapport à l'autre d'un angle déterminé α. Or, sur cette figure 2, chacune de ces bagues angulaires 12 est fixée sur l'enveloppe coudée 11 par une première surface de liaison, matérialisée par une première bague de liaison 12, de manière à ce que le décalage angulaire soit placé dans le plan défini par le coude de l'enveloppe coudée 11. Ainsi, la direction définie par chaque sortie 11A de l'enveloppe coudée 11 se voit décalée angulairement de l'angle déterminé α défini par celui de chaque bague angulaire 12, toujours dans le plan défini par le coude de l'enveloppe coudée 11.

Plus concrètement, si, comme sur cette figure 2, l'angle de l'enveloppe coudée 11 est de 90° et que l'angle de décalage angulaire α de chaque bague angulaire est 10°, il est possible, en utilisant deux de ces bagues angulaires 12, d'obtenir un ensemble coudé à 110°.

Sur cette figure 2, ont été également figurées les deux viroles de confinement 13 et leur barre conductrice 19 respective.

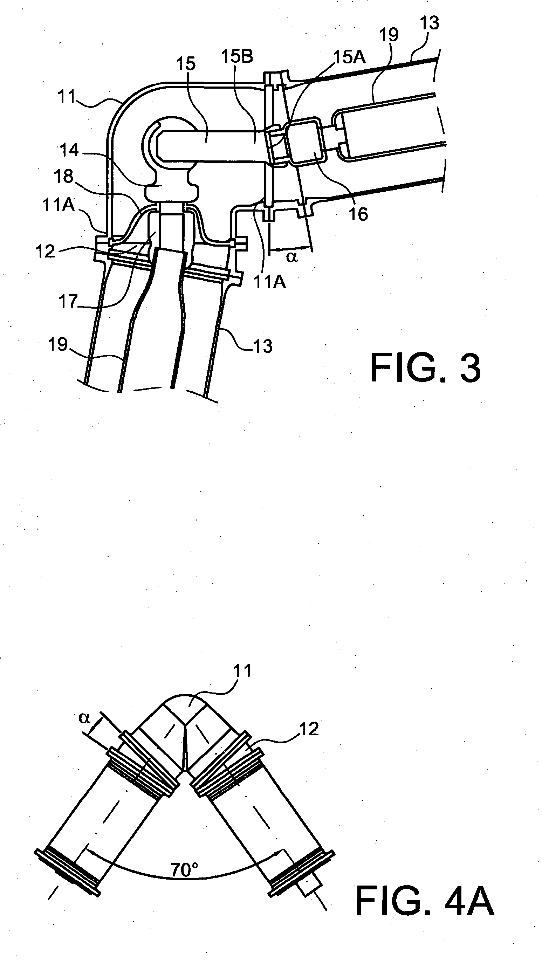

En référence à la figure 3, le même coude est représenté en coupe. On y retrouve les deux viroles de confinement 13 et leur barre conductrice 19 respective, les deux bagues angulaires 12 fixées chacune à une sortie 11A de l'enveloppe coudée 11. Associées à la fourniture des deux bagues angulaires 12 est prévu au moins deux barres de liaison 15, une étant utilisée par coude. La deuxième (non représentée) est utilisée pour un montage sans bague angulaire 12 et est donc symétrique. Cette barre de liaison 15 est reliée électriquement à une électrode fixe 14, qui est connectée elle-même à la barre conductrice 19 qui lui est correspondante. On utilise, à cet effet, un pare-effluve 17, associé à un support isolant 18. Ce dernier relie la jonction de la sortie 11A de la virole coudée 11 et de la surface de liaison de la bague angulaire 12 correspondante avec l'extrémité du pare-effluve 17. Ce dernier est en liaison directe avec l'électrode fixe 14. La barre de liaison 15 est montée de manière à pouvoir s'articuler à partir d'un point de pivot défini par la forme de l'électrode 14. Ainsi, lors du montage, la barre de liaison 15 est fixée à ce point de pivot et orientée de telle façon à obtenir l'angle correspondant défini par le coude de l'enveloppe coudée 11, à savoir dans cet exemple 90°. On note que l'autre extrémité de la barre de liaison 15 a une cavité 15A, décalée angulairement de l'angle déterminé α de la bague angulaire 12. Ainsi, un autre pare-effluve 16 peut être placé dans cette cavité 15A, tout en étant dans le prolongement de la barre conductrice 19 correspondante, à laquelle il est relié électriquement. De même, l'autre pare-effluve 17, en liaison mécanique avec l'électrode fixe 14 présente un décalage angulaire du même angle déterminé α pour pouvoir obtenir une liaison mécanique et électrique dans le prolongement de la barre conductrice correspondante 19.

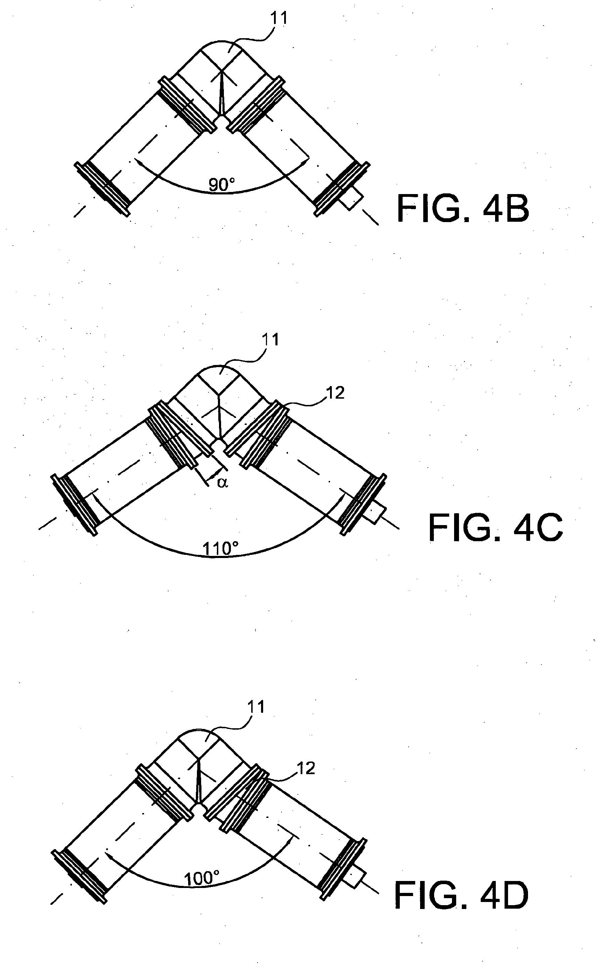

On constate que, avec l'exemple de montage représenté sur cette figure 2, le changement de direction obtenue avec un tel coude est de 110°. Cette réalisation est reprise par la figure 4C, qui est présentée en combinaison avec sept autres figures : 4A, 4B, 4D, 4E, 4F, 4G et 4H. Les cinq premières réalisations utilisent toutes une enveloppe coudée 11 d'un angle de 90°. La première de ces réalisations, représentée par la figure 4A, utilise deux bagues angulaires 12 montées de façon opposée par rapport à la figure 4C, c'est-à-dire que l'angle de décalage α est ouvert vers l'extérieur du coude, pour les deux bagues angulaires 12. De ce fait, l'angle de décalage α étant égal, sur cet exemple à 10°, l'ensemble de coude obtenu présente un angle global de 70°.

L'utilisation d'une virole coudée 11, sans les bagues angulaires, comme le propose la réalisation de la figure 4B permet d'obtenir un angle global du coude de 90°. La réalisation, représentée par la figure 4C, déjà décrite, utilisant deux bagues angulaires 12 placées de façon identique à la réalisation des figures 2 et 3 permet donc d'obtenir un changement de direction avec un angle global de 110°.

La réalisation de la figure 4D utilise une seule bague angulaire 12. De ce fait, l'angle global obtenu est de 100°.

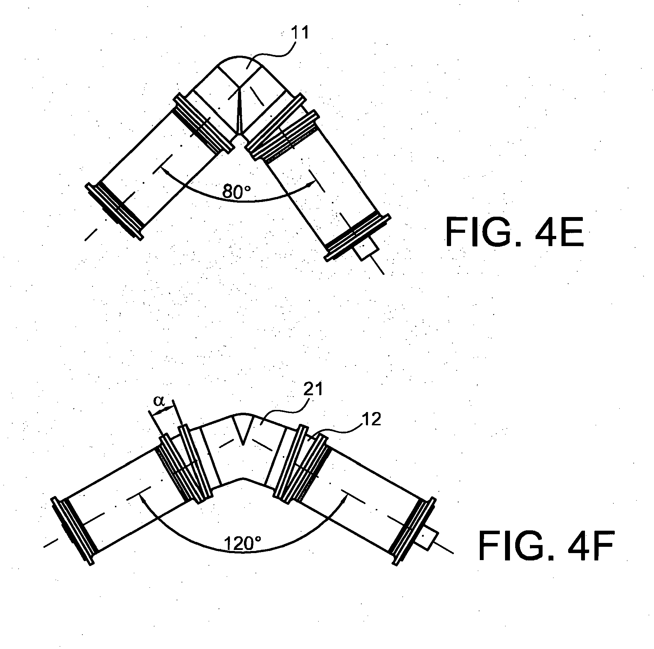

Enfin, par rapport à cette dernière figure 4D, en tournant, lors du montage, la bague angulaire 12 de 180°, on inverse son montage, tel que représenté à la figure 4E. L'angle global obtenu est alors ici de 80°.

En référence à la figure 4F, en utilisant une bague angulaire 21 dont l'angle de coude de 140° et deux bagues angulaires 12 montées de façon identique, avec l'angle de décalage α vers l'extérieur, il est possible d'obtenir un angle global de changement de direction de 120°.

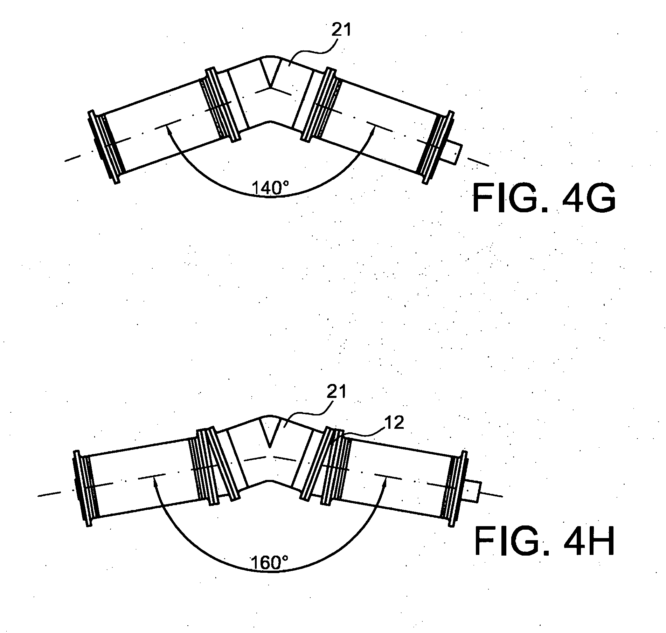

En référence à la figure 4G, en utilisant uniquement la virole coudée 21, sans bague angulaire, l'angle de changement de direction est de 140°.

En référence à la figure 4H, en utilisant les deux mêmes bagues angulaires 12, mais avec un angle α de décalage angulaire inversé, un angle de 160° est ainsi obtenu pour le montage.

En correspondance avec les figures 4D et 4E, on comprendra qu'avec une seule de ces bagues angulaires 12 et une virole coudée 21 à 140°, il est possible d'obtenir les angles de changement d'orientation de 130 et 150°.

Les bagues angulaires peuvent être usinées à l'angle invariable de 10° dans le but d'obtenir une palette d'angles variant par 10°, comme précédemment décrit. Toutefois, il est envisageable de réaliser un usinage spécial de bagues angulaires, dans le but d'obtenir une palette d'angles de changement de direction plus importante, par exemple variant par 1°. Il est ainsi possible de gérer toutes les configurations angulaires possibles.

La plupart des pièces mises en jeu, mis à part le support isolant 18, sont, de préférence, en aluminium.

## Revendications

1. Coude de changement de direction pour une ligne à haute tension de type à isolation gazeuse comportant elle-même deux sections droites composées chacune de :
. une barre conductrice (19) tubulaire ; et
. une virole de confinement (13) entourant la barre conductrice (19) ;
le coude comportant une virole coudée (11, 21),
**caractérisé en ce qu'**il comprend également deux bagues angulaires (12) destinées à pouvoir être interposées, en même temps ou non, chacune entre la virole (11, 21) et une des deux barres conductrices (19) et leur virole de confinement (13) respective chacune par deux surfaces de liaison, une première surface de liaison à fixer sur la virole coudée (11, 21) et une deuxième surface de liaison à fixer sur une virole de confinement (13) correspondante, les première et deuxième surfaces de liaison étant chacune dans des plans respectifs angulairement décalées l'un par rapport à l'autre, d'un angle déterminé (α).

2. Coude selon la revendication 1, **caractérisé en ce que** l'angle de la virole coudée (11) est de 90°, l'angle de décalage angulaire (α) déterminé des bagues (12) angulaires étant égal à 10°.

3. Coude selon la revendication 1, **caractérisé en ce que** l'angle de la virole coudée (21) est de 140°, l'angle de décalage angulaire (α) déterminé des bagues (12) angulaire étant égal à 10°.

4. Coude selon la revendication 1, **caractérisé en ce qu'**il comprend :
- une électrode fixe (14) destinée à être connectée à une première des deux barres conductrices (19) ; et
- une électrode mobile (15) destinée à être connectée à la deuxième des deux barres conductrices (19) et montée sur l'électrode fixe (14), de façon à articuler, de manière à pouvoir pivoter par rapport à celle-ci, notamment lors du montage.

5. Coude selon la revendication 4, **caractérisé en ce que** l'électrode mobile (15) possède à son extrémité (15B) en contact avec la barre conductrice (19) correspondante une cavité de jonction (15A) inclinée de l'angle de décalage angulaire (α) déterminé.

6. Coude selon la revendication 4, **caractérisé en ce qu'il** utilise deux pare-effluve (16, 17) destinés à être placés chacun entre une barre conductrice (19) et une des deux électrodes (14, 15).

## Patentansprüche

1. Winkelstück zur Richtungsänderung für eine Hochspannungsleitung vom Typ mit Gasisolierung, das seinerseits zwei gerade Abschnitte aufweist, die sich jeweils zusammensetzen aus:
- einer rohrförmigen Stromschiene (19); und
- einer Mantelhülse (13), welche die Stromschiene (19) umgibt;
wobei das Winkelstück eine abgewinkelte Hülse (11, 21) aufweist,
**dadurch gekennzeichnet, dass** es auch zwei Winkelringe (12) aufweist, die dazu bestimmt sind, jeweils zwischen die Hülse (11, 21) und eine der beiden Stromschienen (19) und ihre jeweilige Mantelhülse (13) gleichzeitig oder nicht gleichzeitig jeweils über zwei Verbindungsflächen eingesetzt werden zu können, nämlich über eine erste Verbindungsfläche, die an die abgewinkelte Hülse (11, 21) zu befestigen ist, und über eine zweite Verbindungsfläche, die an eine entsprechende Mantelhülse (13) zu befestigen ist, wobei die erste und die zweite Verbindungsfläche jeweils in jeweiligen Ebenen liegen, die um einen bestimmten Winkel (α) winklig zueinander versetzt sind.

2. Winkelstück nach Anspruch 1, **dadurch gekennzeichnet, dass** der Winkel der abgewinkelten Hülse (11) 90° beträgt, wobei der bestimmte Winkel (α) des Winkelversatzes der Winkelringe (12) gleich 10° ist.

3. Winkelstück nach Anspruch 1, **dadurch gekennzeichnet, dass** der Winkel der abgewinkelten Hülse (21) 140° beträgt, wobei der bestimmte Winkel (α) des Winkelversatzes der Winkelringe (12) gleich 10° ist.

4. Winkelstück nach Anspruch 1, **dadurch gekennzeichnet, dass** es aufweist:
- eine feststehende Elektrode (14), die dazu bestimmt ist, mit einer ersten der beiden Stromschienen (19) verbunden zu werden; und
- eine bewegliche Elektrode (15), die dazu bestimmt ist, mit der zweiten der beiden Stromschienen (19) verbunden und an der feststehenden Elektrode (14) so montiert zu werden, dass sie insbesondere bei der Montage gelenkig ist, um bezüglich dieser verschwenkbar zu sein.

5. Winkelstück nach Anspruch 4, **dadurch gekennzeichnet, dass** die bewegliche Elektrode (15) an ihrem mit der entsprechenden Stromschiene (19) in Kontakt stehenden Ende (15B) einen Verbindungshohlraum (15A) besitzt, der um den bestimmten Winkel (α) des Winkelversatzes geneigt verläuft.

6. Winkelstück nach Anspruch 4, **dadurch gekennzeichnet, dass** darin zwei Entladungsschutzeinrichtungen (16, 17) Anwendung finden, die dazu bestimmt sind, jeweils zwischen eine Stromschiene (19) und eine der beiden Elektroden (14, 15) eingesetzt zu werden.

## Claims

1. A direction-changing bend for a high-voltage line of the gas-insulated type, the line comprising two straight sections each composed of:
· a tubular conductive bar (19); and
· a confinement ferrule (13) surrounding the conductive bar (19);
the bend comprising an angled ferrule (11, 21);
the bend being **characterized in that** it includes also two angular rings (12) each designed to be interposed together or not between the ferrule (11, 21) and one of the two conductive bars (19) with its respective confinement ferrule (13) via two connection surfaces, a first connection surface to be fastened on the angled ferrule (11, 21) and a second connection surface to be fastened on a corresponding confinement ferrule (13), each of the first and second connection surfaces being in a respective plane that is angularly offset from the other plane by a determined angle (α).

2. A bend according to claim 1, **characterized in that** the angle of the angled ferrule (11) is of 90°, the determined angular offset angle (α) between the angular rings (12) being equal to 10°.

3. A bend according to claim 1, **characterized in that** the angle of the angled ferrule (11) is of 140°, the determined angular offset angle (α) between the angular rings (12) being equal to 10°.

4. A bend according to claim 1, **characterized in that** it includes:
· a stationary electrode (14) designed to be connected to a first one of the two conductive bars (19); and
· a movable electrode (15) designed to be connected to the second one of the two conductive bars (19) and mounted on the stationary electrode (14), hinge-like, in such a manner as to be capable of pivoting relative thereto, in particular during mounting.

5. A bend according to claim 4, **characterized in that** the movable electrode (15) has a joining cavity (15A) that is inclined by the determined angular offset angle (α) at its end (15B) in contact with the corresponding conductive bar (19).

6. A bend according to claim 1, **characterized in that** it uses two anti-corona caps (16, 17) each intended to be placed between a conductive bar (19) and one of the two electrodes (14, 15).
